# EUROPEAN PATENT APPLICATION

(11) **EP 4 657 654 A1**
(43) Date of publication of application: **03.12.2025**
(21) Application number: 25176353.8
(22) Date of filing: 14.05.2025
(51) Int. Cl.: H01Q 1/28, H01Q 15/14, H01Q 15/16

(54) **MACHINED CORE ANTENNA REFLECTOR AND METHODS OF ASSEMBLING A MACHINED CORE ANTENNA REFLECTOR**

(30) Priority: 31.05.2024 US 202463654320 P
(71) Applicant: MacDonald, Dettwiler and Associates Corporation, Ste-Anne-de-Bellevue, QC H9X 3R2 (CA)
(72) Inventor: Bellemore, Jordan, Sainte-Anne-de-Bellevue, Quebec, H9X 3R2 (CA); Sénéchal, Gérard, Sainte-Anne-de-Bellevue, Quebec, H9X 3R2 (CA); Mottard, Patrick, Sainte-Anne-de-Bellevue, Quebec, H9X 3R2 (CA); Mennitto, Guiseppe, Sainte-Anne-de-Bellevue, Quebec, H9X 3R2 (CA)
(74) Representative: Grünecker Patent- und Rechtsanwälte PartG mbB

(57) **Abstract**

An antenna reflector for reflecting a radio frequency (RF) signal and a method of assembling same are provided. The antenna reflector includes a first face, a second face, and a core, the first face including a reflective material for reflecting the RF signal, the first face mounted to the core and opposing the second face mounted to the core, the first face and the second face together providing a monocoque structure to the antenna reflector, the core having a honeycomb structure, including a plurality of cells disposed between the first face and the second face for separating the first face and the second face, and integral support ribs for stiffening the antenna reflector. The antenna reflector is shaped to reflect the RF signal. The antenna reflector includes mounting points for attachment to a spacecraft.

## Description

### Technical Field

The following relates generally to antenna reflectors, and more particularly to antenna reflectors including a machined core.

### Introduction

Conventional antenna reflectors are often unable to provide both global and local curvature, particularly local curvature that is both concave and convex (i.e., concave local curvature in at least a first portion of the antenna reflector and convex local curvature in at least a second portion of the antenna reflector).

Assembling conventional antenna reflectors involves assembling numerous parts in order to provide a desired curvature for receiving and transmitting the RF signals, a desired stiffness for retaining the desired curvature over use, a compact configuration to fit in the launcher, a required effective coefficient of thermal elastic to achieve minimal thermal elastic distortion, and a desired robustness for surviving launch and in-orbit operations. The greater the complexity, e.g., number of parts, in an antenna reflector, the greater the potential for errors during assembly or malfunctions during use.

Accordingly, there is a need for an improved machined core antenna reflector and an improved method of assembling a machined core antenna reflector that overcome at least some of the foregoing disadvantages.

### Summary

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is an exploded perspective view of a machined core antenna reflector, according to an embodiment;
Figure 2 is a top perspective view of a portion of the core of Figure 1, showing the honeycomb structure (specifically the cells) therein, according to an embodiment; and
Figure 3 is a flowchart of a method of assembling a machined core antenna reflector, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to deployable antenna reflectors, and more particularly to machined core antenna reflectors.

In particular, the present disclosure provides a machined core antenna reflector shaped to provide for accurate transmission and/or reception of RF signals. Such shaping may include curvature. Such curvature may include machining or shaping the entire antenna reflector ("global curvature"), e.g., to include concave and/or convex surfaces or curves. Such curvature may further include machining or shaping of specific parts of an antenna reflector ("local curvature"), e.g., to include concave and/or convex local surfaces or curves. A single antenna reflector may be shaped or machined in a concave global curvature and further shaped or machined according to concave and convex local curvatures, e.g., to discriminate or reflect only certain RF signal ranges. A single antenna reflector may be shaped or machined in a convex global curvature and further shaped or machined according to concave and convex local curvatures, e.g., to discriminate or reflect only certain RF signal ranges.

In an embodiment, the machined core antenna reflector includes a first face, a second face, and a core. The first face includes a reflective material for reflecting the RF signal. The first face is mounted to the core and opposes the second face mounted to the core. The first face and the second face together provide a monocoque structure to the antenna reflector. The core has a honeycomb structure including a plurality of cells within the core and disposed between the first face and the second face for separating the first face and the second face. The reflector includes integral support ribs for stiffening the antenna reflector. The core includes mounting points for the first face and the second face. The antenna reflector is shaped to reflect the RF signal.

Depending on a shape of the antenna reflector, core machining may be performed only on a back side (where global shape is relatively flat and does not include local shaping) or on back and front sides (where the global shape is relatively bowl-like and/or includes local shaping).

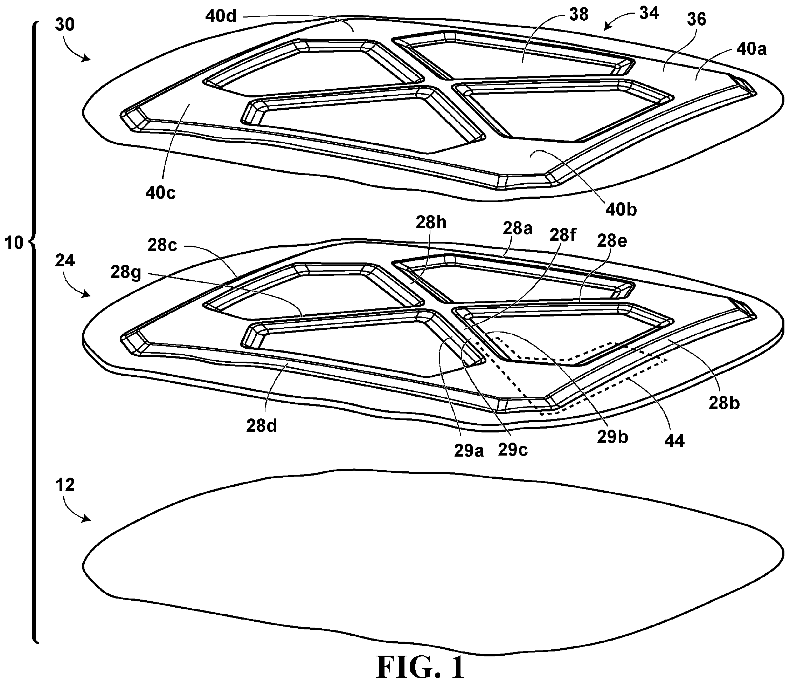

Referring now to Figure 1, shown therein is an exploded perspective view of a machined core antenna reflector 10, according to an embodiment.

The reflector 10 may be part of a larger antenna system, e.g., implemented on an antenna platform (not shown) such as a spacecraft, a satellite, or a satellite bus. The reflector 10 may be parabolic.

The reflector 10 includes a first face 12 for reflecting RF signals. The first face 12 may be understood to be a skin. The first face 12 may be shaped or contoured, locally or globally, in order to improve, optimize, maintain, or minimize degradation or loss of fidelity of signal retransmission. In particular, the first face 12 may be shaped in order to retransmit a signal as a beam.

The first face 12 of the reflector 10 may be suitable for shaping in order to precisely pick up or reflect only certain desired signals or signal bands (e.g., C-band, Ku-band, Ka-band, etc.).

The first face 12 is formed of an RF reflective material for reflecting the RF signals. Such RF reflective material may be or may include carbon or resin.

In a preferred embodiment, the first face 12 is, includes, or is formed of ultra-high modulus carbon-fiber-reinforced polymer (CFRP) pre-impregnated fabric skins, e.g., a polymer resin pre-impregnated graphite skin.

In another embodiment, the first face 12 is, includes, or is formed of reinforced fiber skins. In an embodiment, the fiber skins include aramid fibers. Where the fiber skins include aramid, the fiber skins further include metal grids or strips or have metalized features in order to reflect the RF signals.

The first face 12 includes thicknesses locally defined and optimized to meet design, structural, thermal, manufacturing, and RF performance requirements.

The reflector 10 further includes a second face 30. The second face 30 may be understood to be a skin. In an embodiment, the second face 30 is non-reflective. For example, the second face 30 may be made of a material different to that of the first face 12.

In another embodiment, the second face 30 is, includes, or is formed of reinforced fiber skins. In an embodiment, the fiber skins include aramid fibers.

The second face 30 includes thicknesses locally defined and optimized to meet design, structural, thermal, manufacturing, and RF performance requirements.

The second face 30 further includes an outer non-elevated portion 34.

The second face 30 further includes elevated portions 36, to create the integral ribs 28 as discussed hereinbelow, and inner non-elevated portions 38. The elevated portions 36 of the reflector 10 will be further discussed hereinbelow.

The reflector 10 further includes a core 24 for spacing apart the first and second faces 12, 30. The first face 12 and the second face 30 are each mounted to respective sides of the core 24. Mounting may be achieved using any suitable mounting mechanism. The faces 12, 30 may completely cover the core 24, e.g., such that no portion of the core 24 is visible (except core edges) after the faces 12, 30 are mounted thereto. The faces 12, 30 may not completely cover the core, e.g., such that a portion of the core 24 (other than core edges) is visible after the faces 12, 30 are mounted thereto.

The faces 12, 30 mounted to or about the core 24 create a monocoque structure.

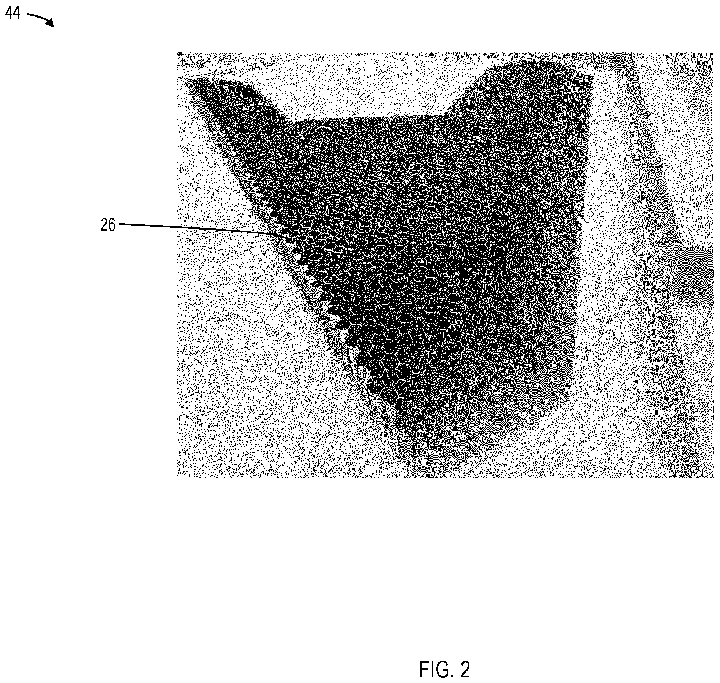

The core 24 includes a honeycomb structure. The honeycomb structure comprises a plurality of cells 26 (as shown in Figure 2). The cells 26 may be hexagonal as shown in Figure 2. The cells 26 may have a flex core cell geometry (e.g., if only the back side of the core 24 is machined).

The core 24 includes a plurality of ribs 28a, 28b, 28c, 28d, 28e, 28f, 28g, and 28h (collectively referred to as the ribs 28 and generically referred to as the rib 28) disposed within the core 24. The ribs 28 are integral to the core 24. The ribs 28 may be considered integrally machine-in support ribs. The ribs 28 may provide a flat or raised section for attachment to the faces 12, 30. The ribs 28 stiffen the reflector 10. The rib geometry may cover the entire footprint of the reflector 10.

The ribs 28 may be created by machining the core 24 to particular thicknesses, elevations, or heights. Such machining may include machining a global curvature and/or a local curvature of the core 24. The support ribs 28 may be tapered, e.g., the support rib 28f may include tapered side portions 29a, 29b and a top portion 29c. The top portion 29c may be flat, an offset of the RF shape, or any other desired shape. It will be appreciated that such tapered side portions 29a, 29b and top portion 29c may be present on some or all the support ribs 28. In the interest of clarity, such tapered side portions 29a, 29b and top portion 29c have only been shown in respect of the support rib 28f. The foregoing tapering may provide a smooth transition for the layup of pre-impregnated graphite material (e.g., when there is a variable thickness).

The core 24 may include thousands of the cells 26. Heights of the cells 26 are optimized structurally.

The ribs 28 of the core 24 correspond to the thicker portions 36 of the second face 34 as previously discussed.

The core 24 may be of a variable thickness, including thicker and thinner portions (the thicker portions being, for example, the ribs 28). The core 24, or each instance thereof, may be customized according to particular needs, e.g., including one or more thicker portions at a particular location of the core 24 and including one or more thinner portions at another particular location of the core 24. The thickness of the core 24 may be up to 4 inches at the thickest portions. The thickness of the core may be down to 0.25 inches at the thinnest portions.

In an embodiment, the thickness of the core 24 varies from between 0.25 inches in thickness at the thinnest portions to 4 inches in thickness at the thickest portions.

In an embodiment, the thickness of the core 24 is uniform. The thickness may be between 0.25 and 4 inches. It may be advantageous to manufacture or machine the core 24 to be as thin as possible wherever possible.

In an embodiment, the honeycomb structure (e.g., the walls of the cells 26) may be made of aluminum.

The ribs 28 are thin relative to the volume of the cells 26. While a variety of honeycomb structures may be suitable for the core 24 according to the present disclosure, it will be appreciated by one of skill in the art that any honeycomb structure that is suitable for the present disclosure includes an array or plurality of the cells 26. In an embodiment, the cells 26 may be columnar and hexagonal in shape.

Advantageously, such a honeycomb structure to or in the core 24 may provide a material with minimal density and relatively high out-of-plane compression properties and out-of-plane shear properties.

The honeycomb structure may be made, prepared, or assembled by layering a honeycomb material (e.g., an aluminum honeycomb material) between the faces 12, 30 that provides strength in tension to form a plate-like assembly.

In an embodiment, the core 24 may be, may include, or may be formed of foam.

The core 24 may be machined. The core 24 may be pre-machined before the faces 12, 30 are mounted thereto. Machining the core 24 includes defining the relative height of the cells 26 by machining on one or both sides of the core 24. Machining on one side, facing the first face 12, is defined by an RF engineer or by RF requirements in respect of the RF reflective surface of the first face 12. Machining on a second side of the core 24, facing the second face 30 is defined by a structural engineer or by structural requirements to structurally reinforce the reflector 10, specifically to keep stable the reflective surface shape of the first face 12. The foregoing includes defining or machining a local elevation or relative height of the cells 26, which may be hexagons.

Machining the core 24 includes machining the core 24 to have a ribbed profile to support the reflector 10 structurally.

The machined core 24 has portions with different local elevations, e.g., a .25-inch height tapers up, e.g. 29a/29b, to a 4-inch height.

The core 24 may be prepared by additive manufacturing, e.g., 3D printing.

The core 24 may be an assembly of multiple pieces of honeycomb material. Such multiple pieces of honeycomb material may be assembled together with an adjoining material (e.g., a foaming adhesive, sewing threads) or method (e.g., nesting open core edges). Such multiple pieces of honeycomb material may be assembled together without an adjoining material (e.g., a foaming adhesive, sewing threads) or method (e.g., nesting open core edges). Bonding between the multiple pieces of honeycomb material may occur at a skin level thereof.

In a preferred embodiment, the core 24 comprises aluminum in a 3D honeycomb structure as previously described.

The core 24 may be adhered to the faces 12, 30 with a 180°C+ glass transition temperature film adhesive. The ribs 28 may be adhered to each other to form the core 24 with the 180°C+ glass transition temperature foaming adhesive.

The core 24 may be adhered to the faces 12, 30 via the resin in the pre-impregnated fiber material of the faces 12, 30.

In an embodiment, the core 24 includes core pieces bonded together with foaming adhesive, and such bonded core 24 is further bonded to the faces 12, 30.

In an embodiment, the core 24 does not use or include a separate adhesive. Where the faces 12, 30 are pre-impregnated as described herein, it is possible to use the resin from the pre-impregnated faces 12, 30 itself to bond to the core.

In other embodiments, the core 24 comprises any aramid, carbon, aluminum, or glass compound.

The core 24 is advantageously not plastically deformed. The core 24 may be curved, machined, or otherwise shaped in three dimensions. Such curvature, machining, or further shaping may include providing concave and/or convex surfaces in the core 24. The core 24 may include concave surfaces, convex surfaces, and/or flat surfaces. The core 24 and/or the entire reflector 10 may have a profile that is concave, convex, or both. Such three-dimensional machining may remove all or substantially all material stress in all dimensions.

In an embodiment, the core 24 is machined on both sides. The core 24 is machined on a side towards the first face 12 to be flat or curved, i.e. to match the RF surface shape requirement. The core 24 is machined on another side, towards the second face 30, according to structural engineering specifications (e.g., defining the ribs 28).

In an embodiment, the second face 34 is an imprint of the core 24.

The faces 12, 30 are attached to the core 24 in a uniform fashion on the respective machined sides of the core 24.

Different parts of the same core 24 may be prepared in different ways. For example, parts of the core 24 may comprise a completely flat stock sheet, while other parts are prepared in three dimensions (e.g., machining, additive manufacturing) and still other parts are prepared in two dimensions (e.g., machining, additive manufacturing). Any and all combinations of components of the core 24 that achieve the objects of the present disclosure are expressly contemplated herein. Accordingly, the core may be of different and multiple densities, e.g., a plurality of different densities.

The core 24 and thus the entire reflector 10 may be of any suitable shape, diameter, or footprint.

The core 24 serves as an integrated ribbing providing a defined separation between the faces 12, 30, creating a stiffened structure in or for the reflector 10.

The foregoing properties of the core 24 allow for non-zero curvature of the reflector 10 including both convex and concave local curvature.

The core 24 may advantageously be very thermally conductive. For example, where the core 24 is aluminum and the faces 12, 30 graphite, the thermal conductivity of the aluminum core 24 provides a thermal bridge between the front face 12 and the rear face 30. The graphite faces 12, 30 advantageously have a CTE (Coefficient of Thermal Expansion) value of nearly 0, which advantageously provides thermal elastic stability to the reflector 10.

The core 24 may be a pre-machined core to which a resin carbon fiber reflective face may be applied to produce a non-stressed sandwich structure reflector 10, the resin carbon fiber reflective face serving as or substantially forming the first face 12. The second face 30 may be similarly prepared.

The reflector 10 may advantageously comprise a minimal number of parts. The reflector 10 may advantageously include both concave and convex local and/or global curvature.

When the core 24 is machined to the correct shape, no stress is induced thereby. The first face 12 and the second face 30 conform to the machined core.

The materials of the reflector 10, particularly the faces 12 and 30, may advantageously be very thermally stable, and the core 24 may advantageously be thermally conductive. The first face 12 and the second face 30 may be subjected to different temperatures. Where the core 24 is aluminum, the thermal gradient between the first face 12 and the second face 30 is minimized as a result of the thermally conductive aluminum core 24, minimizing reflector deformation. Advantageously, no thermal protective covers may be required for use of the reflector 10.

The reflector 10 further includes mounting or attachment points 40a, 40b, 40c, and 40d (collectively referred to as the mounting points 40 and generically referred to as the mounting point 40). The mounting points 40 may be substantially flat and/or raised. The mounting points 40 enable the reflector 10 to be mounted to a spacecraft (not shown). The mounting points 40 may be disposed on the first face 12, the core 24, and/or the second face 30, or any combination thereof. The mounting points 40 may be disposed on or may include portions of the first face 12, the core 24, and/or the second face 30 other than the corners thereof as shown in the square embodiment of Figure 1. In particular, the mounting points 40 may be or may include any one or more vertices of the reflector 10 (e.g., on the first face 12, the core 24, and/or the second face 30) when shaped like a triangle, hexagon, octagon, or other polygon. The mounting points 40 may include points at the center and along the perimeter of a polygon, e.g., points along the circumference of a circular reflector 10. The mounting points 40 may vary in type and/or geometry.

The mounting points 40 may include further structures (e.g., 3D-printed structures) to assist in attachment to the spacecraft.

Referring now to Figure 2, shown therein is a top perspective view of the region 44 of the core 24, showing the honeycomb structure (specifically the cells 26) therein, according to an embodiment.

The cells 26 space apart the faces 12, 30.

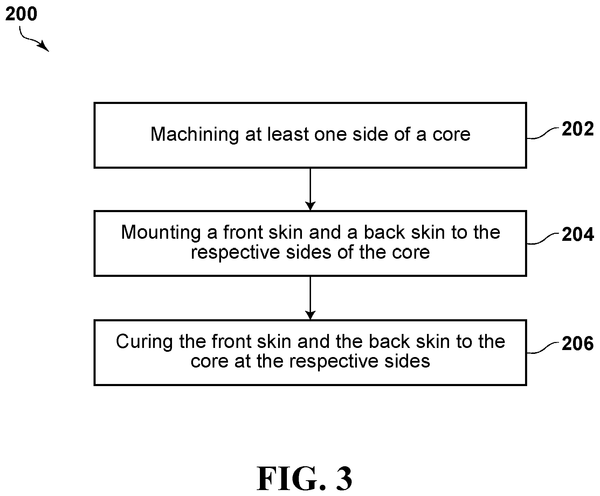

Referring now to Figure 3, shown therein is a flowchart of a method 200 of assembling a machined core antenna reflector, according to an embodiment. The machined core antenna reflector assembled according to the method 200 may be the reflector 10 of Figure 1.

At 202, the method 200 includes machining at least one side of a core. The core machined at 202 may be the core 24 of Figure 1. Preferably, the machining includes three-dimensional machining. Either the front side or the back side of the core 24 may be machined. In a preferred embodiment, both the front side and the back side of the core are machined.

In an embodiment, the front side of the core 24 is machined with respect to global curvature and/or local curvature.

At 204, the method 200 includes mounting a front skin and a back skin to the respective sides of the core. The front skin and the back skin may be the first face 12 and the second face 30, respectively, of Figure 1.

The skins may be or may include resin carbon fiber. The skins may be of the same or different materials. Preferably, the skins are, include, or are formed of carbon-fiber-reinforced polymer (CFRP) pre-impregnated fabric skins. The skins may be prepared using a polymer resin or a cyanate ester. The CFRP may be ultra-high modulus CFRP.

In another embodiment, the skins are, include, or are formed of reinforced fiber skins. In an embodiment, the fiber skins include aramid fibers. Where the fiber skins include aramid, the fiber skins further include metal grids or strips or have a metalized feature in order to reflect the RF signals.

At 206, the method 200 includes curing the front skin and the back skin to the core at the respective sides. The curing may occur at substantially the same time ("co-curing"). The curing may take place in sequence. The curing may take place at different times.

The front and back skins are cured on the mold to create stress-free skins. The core may be machined on both sides to create a stress-free core. At 206, the reflector is cured using the stress-free skins and the stress-free core in order to manufacture a stress-free reflector to provide optimal RF performance in its environment. Because the reflector and components thereof are stress-free, the reflector maintains its shape after being removed from the mold, and so the method 200 may include no further shaping after removing the reflector from the mold.

The method 200 may further include precisely machining the mold to the desired shape to accomplish the foregoing. The method 200 may include providing or using a mold previously precisely machined to the desired shape to accomplish the foregoing.

It will be appreciated by one of skill in the art that the skins may be precured before being mounted to different sides of the core at 204.

It will be appreciated by one of skill in the art that the core may be additively manufactured, all or in part, at 202.

Preferably, the core is a honeycomb core as described with respect to the core 24 of Figure 1. The core may be a shaped foam core.

The reflector 10 of Figure 1 and/or the reflector assembled by the method 200 of Figure 3 advantageously have a monocoque configuration to allow for shaped, larger surfaces (convex, concave) without compromising structural integrity or fidelity of signal transmission.

The skins 10, 32 may each be or be made from a fabric that may be unrolled onto a mold to be cured. Such fabrics may include a resin infused therein. The core 24, machined on at least one respective side thereof as previously described, may be placed on the mold and the fabric for the skins 10, 32 applied on the respective sides. The curing may include sandwiching the core 24 with the fabric disposed thereon in a vacuum bag and curing at 350° F. After curing, the reflector 10 may separate as a rigid shaped structure from the mold.

In an embodiment where only the back side of the core is machined, the core may be pre-stressed on the mold.

A goal of the present disclosure is to minimize pre-stressing core on mold. If the RF surface of the front side is bowl-shaped in a global or local fashion, preferably both the front and back sides are machined. If RF surface on the front side is globally flat and not locally shaped, it may be the case that only the back side is machined.

While the above description provides examples of one or more apparatus, methods, or systems, it will be appreciated that other apparatus, methods, or systems may be within the scope of the claims as interpreted by one of skill in the art.

## Claims

1. An antenna reflector for reflecting a radio frequency (RF) signal, the antenna reflector comprising:
a first face, a second face, and a core;
the first face including a reflective material for reflecting the RF signal, the first face mounted to the core and opposing the second face mounted to the core, the first face and the second face together providing a monocoque structure to the antenna reflector;
the core having a honeycomb structure, including a plurality of cells disposed between the first face and the second face for separating the first face and the second face, and integral support ribs for stiffening the antenna reflector;
wherein the antenna reflector is shaped to reflect the RF signal;
wherein the antenna reflector includes mounting points for attachment to a spacecraft.

2. The antenna reflector of claim 1, wherein the reflective material is a carbon-fiber-reinforced polymer (CFRP) resin pre-impregnated fabric skin.

3. The antenna reflector of claim 1, wherein the first face and the second face are formed of resin carbon fiber.

4. The antenna reflector of claim 1, wherein the core has a variable thickness between 0.25 inches and 4 inches and a plurality of different densities.

5. The antenna reflector of claim 1, wherein the antenna reflector is shaped through global curvature to reflect the RF signal, the global curvature including concave surfaces and/or convex surfaces or through local curvature to reflect the RF signal, the local curvature including concave surfaces and/or convex surfaces.

6. The antenna reflector of claim 1, wherein the honeycomb structure is an aluminum honeycomb structure, and wherein the plurality of cells are columnar and hexagonal in shape.

7. The antenna reflector of claim 1, wherein the integral support ribs are created by machining the core to one or more specified thicknesses, and wherein the support ribs are tapered.

8. A method of assembling a machined core antenna reflector, the method comprising:
machining at least one side of a core;
mounting a front face and a back face to the respective sides of the core, the front face including a reflective material for reflecting a radio frequency (RF) signal; and
curing the front face and the back face to the core at the respective sides, thereby providing a monocoque structure to the antenna reflector.

9. The method of claim 8, wherein machining the at least one side of the core includes machining both sides of the core.

10. The method of claim 8, wherein the front face and the back face are cured to the core at the same time.

11. The method of claim 8, wherein the core has a variable thickness varying between 0.25 inches and 4 inches and a plurality of different densities.

12. The method of claim 8, wherein the antenna reflector is machined through global and/or local curvature to reflect the RF signal, the machined global curvature and/or the machined local curvature including concave surfaces and convex surfaces.

13. The method of claim 8, wherein the reflective material is a carbon-fiber-reinforced polymer (CFRP) resin pre-impregnated fabric skin.

14. The method of claim 8, wherein the core has an aluminum honeycomb structure including a plurality of columnar, hexagonal cells within the core and disposed between the first face and the second face for separating the first face and the second face, the core including integral support ribs for stiffening the antenna reflector, the reflector including mounting points for attachment to a spacecraft.

15. The method of claim 12, wherein machining the at least one side of the core includes machining the core to one or more specified thicknesses to create the integral support ribs including machining the global curvature and/or the local curvature.
